# NEUE EUROPÄISCHE PATENTSCHRIFT

(11) **EP 1 764 523 B2**
(45) Veröffentlichungstag und Bekanntmachung des Hinweises auf die Entscheidung über den Einspruch: **25.10.2017**
(45) Hinweis auf die Patenterteilung: 11.06.2014
(21) Anmeldenummer: 06018425.6
(22) Anmeldetag: 04.09.2006
(51) Int. Cl.: F16D 21/06

(54) **Lamellen-Kupplungseinrichtung**
Multi-disc clutch device
Dispositif d'embrayage à disques multiples

(30) Priorität: 16.09.2005 DE 102005044227
(43) Veröffentlichungstag der Anmeldung: 21.03.2007
(73) Patentinhaber: ZF Friedrichshafen AG, 88046 Friedrichshafen (DE)
(72) Erfinder: Grosspietsch, Wolfgang, 97422 Schweinfurt (DE); Ebert, Angelika, 97453 Schonungen (DE)

(56) Entgegenhaltungen:
- EP-A- 1 195 537
- EP-A1- 1 382 875
- EP-A1- 1 522 753
- EP-A1- 1 568 906
- EP-A2- 0 230 106
- EP-A2- 0 762 004
- WO-A-01/46599
- WO-A-2005/108811
- WO-A1-2006/125046
- DE-A1- 4 239 233
- DE-A1- 10 124 213
- DE-A1- 10 124 213
- DE-A1- 10 146 837
- DE-A1- 19 521 281
- FR-A1- 2 745 871
- FR-A1- 2 786 836
- JP-A- H0 628 419
- JP-A1- H11 182 579
- US-A- 3 823 802

## Beschreibung

Die Erfindung bezieht sich auf eine nasslaufende Lamellen-Kupplungseinrichtung, welche mittels eines hydraulisch betätigbaren Kolbens ein Lamellenpaket betätigt, wobei der Kolben mehrteilig ausgebildet ist.

Es sind bereits Kupplungseinrichtungen bekannt (z.B. DE 101 11 202 A1), bei denen eine nasslaufende Doppelkupplung beschrieben wurde, welche über zwei radial angeordnete Lamellenkupplungsanordnungen verfügt, die jeweils mittels eines integrierten Druckmediumkraftzylinders betätigbar sind. Diese Zylinder weisen axial verschiebbare Betätigungskolben auf. Hierbei sind die Betätigungskolben einstückig ausgebildet wobei am Kolben oder einem Lamellenträger eine Dichtungsanordnung angebracht ist, welche aus einem schweißbaren Dichtungselementhalter und einem aufvulkanisierten Dichtungselement besteht. Nachteilig hierbei ist die aufwändige und teure Konstruktion der Dichtungsanordnung, welche zudem in einem gesonderten Montageschritt am Kolben angeschweißt werden muss.

Weiterhin sind Lamellen-Kupplungseinrichtungen bekannt, (z.B. DE 102 54 066 A1) bei welchem ein Dichtungselement axial fest in einer Ringnut einer Nabe angeordnet ist. Zum Abdichten des Druckraumes ist der Kolben an seinem Innenumfang mit einem zylindrischen Abschnitt ausgebildet, welcher als Gegendichtfläche dient und sich bei Betätigen der Lamellen-Kupplungseinrichtung relativ zum Dichtungselement verschiebt. Der Kolben ist hierbei einstückig ausgebildet und trägt weiterhin ein aufvulkanisiertes Dichtungselement zum Abdichten des Druckraumes am Außenumfang. Nachteilig bei dieser Ausgestaltung des Kolbens ist die kostenaufwändige Herstellung desselben sowie der benötigte axiale Bauraumbedarf am Innenumfang des Kolbens, welcher sich aus dem Verfahrweg und der axialen Erstreckung der Gegendichtfläche ergibt.

Aus der DE 199 61 988 sind weiterhin Lamellen-Kupplungseinrichtungen bekannt, welche über einen einstückig ausgebildeten Kolben betätigt werden. Der Kolben weist hierzu an seinem Innenumfang und seinem Außenumfang eine Ringnut zur Aufnahme eines Dichtungsringes auf, welche den Druckraum abdichten. Weiterhin ist dem Kolben ein Fliehkraftdruckausgleichsraum zugeordnet, welcher durch einen in einer Ringnut am Außenumfang einer den Fliehkraftdruckausgleichsraum begrenzenden Wandung angeordneten Dichtungsring abgedichtet wird. Nachteilig hierbei ist die große Wandstärke des Kolbens, welche nötig ist, um eine Ringnut einarbeiten zu können ohne die Stabilität des Kolbens zu beeinträchtigen. Eine gewichtsoptimierte Ausführung des Kolbens als Stahlblechteil ist somit nicht möglich.

Aus der EP 1 195 537 A1 ist eine Lamellen-Kupplungseinrichtung zur Drehmomentübertragung in einem Antriebsstrang eines Kraftfahrzeugs zwischen einer Antriebseinheit und einem Getriebe bekannt, wobei die Kupplungseinrichtung mindestens ein, mittels einem hydraulisch betätigbaren Kolben, betätigbares Lamellenpaket aufweist, welches mit einem Innenlamellenträger drehfest angeordnete Innenlamellen und mit einem Außenlamellenträger drehfest angeordnete Außenlamellen aufweist, wobei zur Kühlung des Lamellenpakets die Lamellen-Kupplungseinrichtung mit von einer Kühlölversorgungs-Einrichtung bereitgestellten Kühlöl durchströmt wird, wobei der mindestens eine Kolben mehrteilig ausgebildet ist und ihm ein an die Kühlölversorgungs-Einrichtung angeschlossener Fliehkraftdruckausgleichsraum zugeordnet ist, wobei der mindestens eine Kolben aus einem radial inneren Trägerelement und einem radial äußeren Betätigungselement gebildet wird. Der Fliehkraftausgleichsraum wird von einem Ausgleichsdeckel gebildet, welcher an dem radial äußeren Betätigungselement des zweiteiligen Kolbens angeordnet ist.

Hiervon ausgehend ist es Aufgabe der Erfindung, eine hydraulische betätigbare Lamellen-Kupplungseinrichtung derart weiterzubilden, dass eine kostengünstige Abdichtung des Kolbens und des Fliehkraftdruckausgleichsraumes erreicht wird.

Die Aufgabe wird durch die Merkmale des Patentanspruchs 1 gelöst.

Vorteilhaft hierbei ist, dass die verschiedenen Teile des Kolbens separat herstellbar sind, wodurch die Herstellkosten gegenüber einteiligen Kolben gleicher Größe reduziert werden können, da bei fehlerbehafteter Fertigung eines der Teile nicht der komplette Kolben Ausschuss darstellt. Vorzugsweise werden die einzelnen Teile des Kolbens in verschiedenen Herstellverfahren hergestellt.

Nach einem wesentlichen Merkmal der Erfindung weist das Trägerelement Ringnuten zur Aufnahme von Dichtungselementen auf, welche den Druckraum und den Druckausgleichsraum abdichten. Vorzugsweise ist hierzu das Trägerelement an seinem Außenumfang oder/und seinem Innenumfang mit Ringnuten versehen. Vorteilhaft hierbei ist, dass separate kostengünstige Dichtelemente in die Ringnuten eingesetzt werden können und ein Anvulkanisieren von Dichtungselementen am Kolben entfällt. Höchstvorzugsweise sind hierbei am Außenumfang je eine Ringnut zur Abdichtung des Druckraumes und des Druckausgleichsraumes angeordnet und am Innenumfang eine Ringnut zur Aufnahme eines gemeinsamen Dichtungselementes zwischen Druckraum und Druckausgleichsraum. Eine vorteilhafte Ausgestaltung der Dichtungselemente sieht hierbei vor, dass die Dichtungselemente als Lippendichtungen oder Formdichtungen ausgeführt sind. Hierdurch wird vorteilhafterweise die Hysterese im System klein gehalten.

Eine vorteilhafte Ausgestaltung der Erfindung sieht vor, dass das Trägerelement an seinem Außenumfang einen Axialanschlag zur Axialsicherung des Betätigungselementes aufweist. Vorzugsweise weist hierbei das Trägerelement eine weitere Ringnut aus, in welcher ein Sicherungsring angeordnet ist, welcher als Axialanschlag für das Betätigungselement dient. Alternativ kann der Axialanschlag von einem Radialabsatz des Trägerelementes gebildet werden.

Eine besonders vorteilhafte Ausgestaltung sieht weiterhin vor, dass das Betätigungselement gegenüber dem Trägerelement verdrehgesichert ist. Hierzu weist das Trägerelement an seinem Außenumfang mindestens einen radial nach außen stehenden Noppen auf, welcher in eine korrespondierende Aussparung am Innenumfang des Betätigungselementes formschlüssig eingreift. Hierdurch werden Relativverdrehungen des Betätigungselementes gegenüber dem Trägerelement verhindert, welche bei Drehschwingungen oder starken Beschleunigungs- oder Verzögerungsvorgängen auftreten könnten.

Nach einem weiteren wesentlichen Aspekt der Erfindung ist vorgesehen, dass das Trägerelement aus einem anderen Material besteht als das Betätigungselement. Erfindungsgemäß besteht das Trägerelement zumindest teilweise aus Kunststoff. Höchstvorzugsweise wird das Trägerelement in einem Spritzgießverfahren oder Druckgussverfahren hergestellt. Vorteilhaft hierbei ist die kostengünstige Herstellbarkeit des Trägerelementes, welches eine gegenüber dem Betätigungselement kompakte Bauform aufweist. Ein weiterer Vorteil ist die einfache Herstellbarkeit der Ringnuten, welche bei einem Trägerelement aus Kunststoff bereits im Gießverfahren mit eingebracht werden können, wodurch kein weiterer Verfahrensschritt nötig ist.

Erfindungsgemäß ist das Betätigungselement aus Stahlblech hergestellt, vorzugsweise in einem Tiefziehverfahren. Vorteilhaft bei der Ausgestaltung aus Stahlblech ist die axiale Steifigkeit des scheibenförmig ausgebildeten Betätigungselementes. Weiterhin ist der geringe axiale Bauraumbedarf des Betätigungselementes sehr vorteilhaft, wodurch der axiale Bauraumbedarf des Betätigungselementes im Wesentlichen nur aus dem Verfahrweg des Kolbens bestimmt wird.

Ein weiterer wesentlicher Vorteil der Auftrennung des Kolbens in ein Trägerelement und ein Betätigungselement gegenüber einem einteilig gebildeten Kolben aus Stahlblech ist die geringere axiale Verformbarkeit des Kolbens, da das Trägerelement axial steifer ausgebildet ist als der entsprechende Radialbereich eines einteiligen Stahlblechkolbens, wodurch der Kolben im radialen Bereich des Druckraumes quasi starr ausgebildet ist. Hierdurch sind die axialen elastischen Verformungen bei Druckbeaufschlagung zwischen radialen Innen- und Außenbereich geringer, wodurch ein Verkippen wesentlich reduziert wird.

Im folgenden wir die Erfindung im Zusammenhang mit den Zeichnungen näher erläutert. Es zeigen:
Fig. 1 eine erfindungsgemäße Lamellen-Kupplungseinrichtung.
Fig. 2a das Trägerelement und das Betätigungselement aus Fig. 1 in einer geschnittenen Darstellung
Fig. 2b das Trägerelement und das Betätigungselement aus Fig. 1 in räumlicher Darstellung.

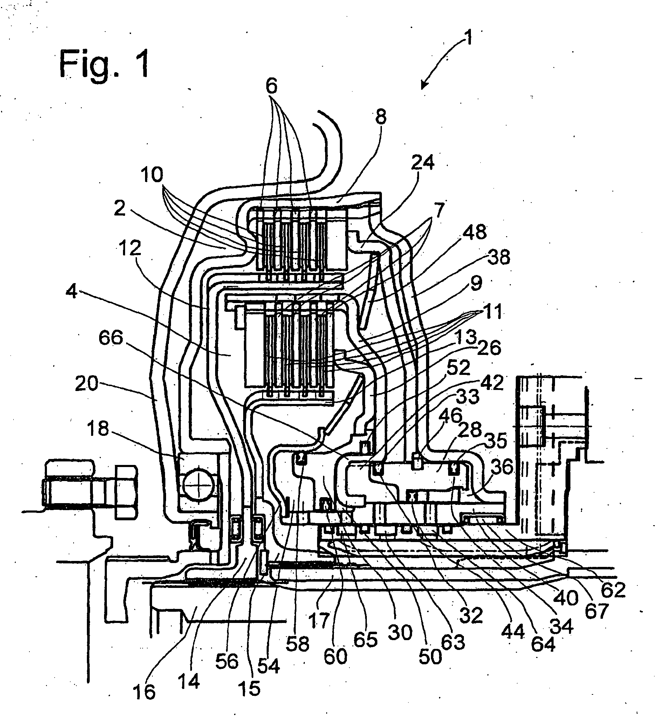

In Fig.1 ist eine Doppelkupplungseinrichtung 1 mit zwei radial angeordneten Kupplungsanordnungen 2,4 dargestellt. Hierbei sind die Außenlamellen 6 der radial äußeren Kupplungsanordnung drehfest aber axial verschiebbar im Außenlamellenträger 8 angeordnet. Die Innenlamellen 10 sind drehfest mit dem Innenlamellenträger 12 verbunden, welcher über die Nabe 14 mit der inneren Getriebeeingangswelle 16 drehfest verbunden ist. Die Außenlamellen 7 der radial inneren Kupplungsanordnung 4 sind drehfest aber axial verschiebbar im Außenlamellenträger 9 angeordnet. Die Innenlamellen 11 sind drehfest mit dem Innenlamellenträger 13 verbunden, welcher über die Nabe 15 mit der äußeren Getriebeeingangswelle 17 drehfest verbunden ist.

Die Kupplungseinrichtung 1 ist eingangsseitig über die Lageranordnung 18, welche sich zwischen einem Axialbereich des Außenlamellenträgers 8 und einem mit dem Getriebegehäuse fest verbunden Deckel 20 befindet, im Getriebegehäuse gelagert. Das von der Antriebseinheit erzeugte Drehmoment wird über einen nicht dargestellten Torsionsschwingungsdämpfer auf die Eingangsnabe 22 übertragen, welche mit dem Außenlamellenträger verschweißt ist. Zur Betätigung der beiden Kupplungsanordnungen 2,4 dienen die beiden Betätigungselemente 24, 26, welche bei Betätigung die Lamellenpakete zusammenpressen. Die Betätigungselemente 24, 26, sind mit den beiden radial innerhalb angeordneten Trägerelementen 28, 30 verbunden. Das Trägerelement 28, welches aus Kunststoff hergestellt ist, ist an seinem Außenumfang mit zwei Ringnuten 32, 34 versehen, in welchen die Dichtungselemente 33, 35 angeordnet sind. Das Dichtungselement 35 dichtet den Druckraum 36 radial außen ab, welcher vom Trägerelement 28 und der Mitnehmerscheibe 38 gebildet wird. Die Mitnehmerscheibe 38 ist an ihrem Außenumfang drehfest mit dem Außenlamellenträger 8 verbunden und an ihrem Innenumfang drehfest mit der Nabe 40 verbunden, vorzugsweise radial innen und außen verschweißt. Der Druckausgleichsraum 42 wird durch das Trägerelement 28 und dem Außenlamellenträger 9 der inneren Kupplung, welcher drehfest mit der Nabe 40 verbunden ist, gebildet. Nach radial außen wird der Druckausgleichsraum 42 vom Dichtelement 33 abgedichtet, welches an einem axialen Innenumfangsbereich des Außenlamellenträgers 9 dichtend geführt wird. Nach radial innen sind der Druckraum 36 und der Druckausgleichsraum 42 mit dem Dichtelement 44 abgedichtet, welches in einer Ringnut am Innenumfang des Trägerelementes 28 angeordnet ist und das Trägerelement gegen die Nabe 40 abdichtet. Das Betätigungselement ist in Richtung Getriebe am Sicherungselement 46 abgestützt, welches in einer weiteren Ringnut am Außenumfang des Trägerelementes 28 angeordnet ist. Bei Druckbeaufschlagung des Druckraums 36 mit Drucköl, wird das Trägerelement in Richtung Antriebseinheit verschoben und drückt über das Betätigungselement, welches mittels des Sicherungselementes mit verschoben wird, das Lamellenpaket der Kupplungsanordnung 2 zusammen. Zum Lösen der Kupplung wird der Betätigungsdruck abgebaut und das Betätigungselement wird über die Rückstellfeder 48 zurückgeschoben, wobei das Trägerelement 28 über das Sicherungselement 46 ebenfalls zurückgeschoben wird. Die Vorlast der Rückstellfeder 48 reicht auch bei geöffneter Kupplung aus, das Betätigungselement 24 gegen das Sicherungselement 46 anzudrücken, wodurch ein Abheben des Betätigungselement 24 vom Sicherungselement 46 verhindert wird. Der Betätigungskolben der radial inneren Kupplungsanordnung ist in analoger Weise zweiteilig aufgebaut und besteht im Wesentlichen aus dem Trägerelement 30 und dem Betätigungselement 26. Das Betätigungselement wird jedoch nicht über einen Sicherungsring abgestützt sondern über einen radialen Anschlag des Trägerelementes 30. Der Druckraum 50 wird vom Außenlamellenträger 9 und dem Trägerelement 30 gebildet und nach radial außen vom Dichtungselement 52 abgedichtet, welches in einer Ringnut am Innenumfang eines axialen Fortsatzes des Trägerelementes 30 angeordnet ist und auf einer Außenumfangsfläche des Außenlamellenträgers 9 dichtend geführt ist. Der Druckausgleichsraum 54 wird gebildet vom Trägerelement 30 und der Wand 56, welche am axialen Ende der Nabe 40 fest angeordnet ist. Der Druckausgleichsraum 54 wird nach radial außen durch das Dichtelement 58 abgedichtet, welches in einer Ringnut am Außenumfang des Trägerelementes 30 angeordnet ist und an einer axialen Innenumfangsfläche der Wandung 56 geführt ist. Nach radial Innen sind der Druckraum 50 und der Druckausgleichsraum 54 durch das Dichtelement 60 gegeneinander abgedichtet, welches in einer Ringnut am Innenumfang des Trägerelementes 30 angeordnet ist und dichtend auf der Nabe 40 geführt ist. Durch die radial äußere Abdichtung der beiden Druckräume 36, 50 und der beiden Druckausgleichsräume 42 und 54 mit je einem separaten Dichtelement kann der Außendurchmesser des Druckraumes bezüglich seines zugeordneten Druckausgleichraumes unabhängig ausgeführt werden, womit eine Überkompensation oder eine Unterkompensation der durch das rotierende Drucköl bedingten Fliehkraft eingestellt werden kann. In der erfindungsgemäßen Ausgestaltung der Doppelkupplung in Fig.1 sind die Druckausgleichsräume 54, 42 auf selbem Durchmesser abgedichtet wie die zugehörigen Druckräume 50, 36. Der axiale Erstreckungsbereich 66 des Außenlamellenträgers 9 der inneren Kupplung dient an seiner Innenumfangsfläche als Dichtfläche für das Dichtelement 33, welches den Druckausgleichsraum 42 der radial äußeren Kupplung nach radial außen hin abdichtet. Gleichzeitig dient der axiale Erstreckungsbereich 66 des Außenlamellenträgers 9 an seiner Außenumfangsfläche als Dichtfläche für das Dichtelement 52, welches den Druckraum 50 der inneren Kupplung nach radial außen hin abdichtet. Der Dichtradius des Druckraumes 50 ist hierbei um die Wandstärke des Außenlamellenträgers 9 im axialen Erstreckungsbereich 66 größer. Hierdurch ist eine kompakte Bauform der beiden axial angeordneten Betätigungskolben, bzw., der beiden Trägerelemente 30, 28 realisiert. Im Bereich des axialen Erstreckungsbereichs 66 des Außenlamellenträgers 9 weisen die beiden Trägerelemente einen axialen Überdeckungsbereich auf, wodurch die axiale Gesamterstreckung der Nabe um die Länge des Überdeckungsbereiches der Trägerelemente reduziert werden kann. Wesentlich hierbei ist, dass die beiden Dichtelemente 33, 55, welche zum einen den Druckausgleichsraum der radial äußeren Kupplung und zum anderen den Druckraum der radial inneren Kupplung abdichten, sich im Wesentlichen gegenüberliegen und denselben axialen Verschiebebereich, auf den gegenüberliegenden Seiten des axialen Bereichs 66 nutzen. Erfindungsgemäß werden für die beiden Trägerelemente 30, 28 identische Dichtungselemente 33, 35, 44, 52, 58, 60 verwendet. Die Ölversorgung der beiden Druckräume 36 und 50 sowie der beiden Druckausgleichsräume 42 und 54 erfolgt über radiale Zuführkanäle in der Nabe 40, welche über eine Drehdurchführung mit dem stehenden Ölzuführelement 62, welches die beiden Getriebewellen 16, 17 ringförmig umgibt. Hierzu ist das Ölzuführelement 62 radial innerhalb der Nabe 40 angeordnet und weist am Außenumfang Ringkanäle 63, 64, 65 auf, welche mit den rotierenden Zuführkanälen der Nabe 40 korrespondieren. Die Ringkanäle 63, 64, 65 sind mit Axialkanälen innerhalb der Nabe verbunden, über welche Drucköl, bzw. Ausgleichsöl von einer nicht dargestellten Hydraulikeinheit ins Kupplungsinnere gepumpt wird. Weiterhin wird über das stehende Ölzuführelement 62 Kühlöl zur Kühlung der Lamellenpakete ins Kupplungsinnere gefördert. Hierzu tritt das Kühlöl am axialen Ende des Ölzuführelements 62 ins Kupplungsinnere aus und strömt aufgrund der Fliehkraft nach radial außen durch die Lamellenpakete. Die beiden Fliehkraftdruckausgleichsräume 42, 54 liegen hierbei im Kühlölpfad, bzw. sind an die Kühlölkanäle der Nabe 40 angeschlossen. Der Ausgleichsraum 54 wird hierbei vom axial von der Nabe austretenden Kühlöl versorgt, da dieses aufgrund der Fliehkraft bei rotierender Kupplung axial am Innenumfang der Nabe 40 entlangfließt um dann nach radial außen zu gelangen. Hierbei wird über die Radialöffnung in der Nabe der Ausgleichsraum 54 gefüllt. Getriebeseitig ist die Kupplungsanordnung über die Lageranordnung 67 auf dem stationären Ölzuführelement 66 gelagert. Hierzu weist die Nabe 40 einen innenseitigen Falz zur Aufnahme der Lageranordnung 67 auf. Da über das Ölzuführelement 66 kein Drehmoment übertragen wird, kann dieses erfindungsgemäß mehrteilig ausgebildet sein und zumindest teilweise aus Kunststoff bestehen. Hierzu kann das Ölzuführelement 66 im Wesentlichen aus zwei ineinander geschobenen Hülsen bestehen, wobei die radial innere an ihrer Außenumfangsfläche axiale Kanäle aufweist und die radial äußere Hülse die Ringnuten 63, 64, 65 sowie weitere jeweils benachbarte Ringnuten zur Aufnahme von Dichtungselementen aufweist. Erfindungsgemäß kann zumindest eines der Hülsenbauteile oder beide aus Kunststoff bestehen.

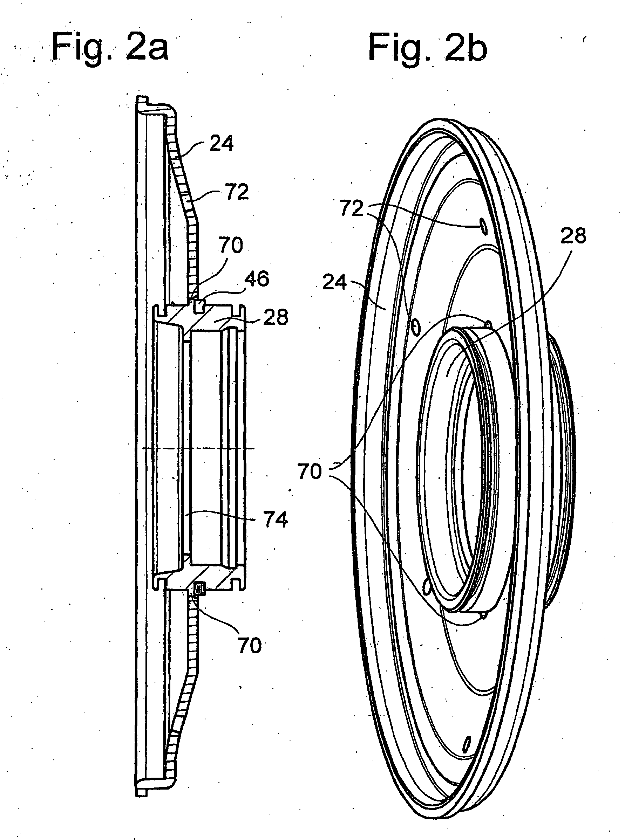

Fig. 2a zeigt das Trägerelement 28 und das Betätigungselement 24 in einer geschnittenen Darstellung. Hierbei geht die Schnittebene durch die Sicherungselemente 70 des Trägerelementes 28. Die beiden Sicherungselemente 70 sind direkt neben der Ringnut, welche das Sicherungselement 46 aufnimmt, gegenüberliegend angeordnet und als radial vorstehende Noppen ausgebildet. Das Betätigungselement 24 weist an seinem Innenumfang korrespondierende Ausnehmungen auf, in welche die Noppen formschlüssig eingreifen. Bei Anlage des Betätigungselementes 24 am Sicherungselement 46 liegen die Noppen in der Ebene des Betätigungselementes 24 und wirken somit als Verdrehsicherung. Das Betätigungselement 24 ist als kalt umgeformter Stahldeckel ausgebildet und weist weiterhin Radialöffnungen 72 auf, wodurch ein Druckausgleich, bzw. ein Mediumstrom von der Vorderseite zur Rückseite des Betätigungselements 24 erfolgen kann. Das Trägerelement 28 ist als gegossenes Kunststoffteil ausgebildet und weist am Außenumfang die beiden Ringnuten 32, 34 auf, welche zur Aufnahme der den Druckraum und den Druckausgleichsraum abdichtenden Dichtungselemente dienen. Am Innenumfang des Trägerelementes 28 ist der radial nach innen stehende Absatz 74 angeordnet, welcher als Axialanschlag des Dichtungselementes dient, welches den Druckraum zu dem Druckausgleichsraum abdichtet.

In Fig. 2b. ist das Trägerelement 28 im Zusammenbau mit dem Betätigungselement 24 in räumlicher Darstellung dargestellt. Deutlich zu erkennen sind hierbei die beiden Sicherungselemente 70 des Trägerelementes 28. Weiterhin sind die rotationssymmetrisch am Umfang des Betätigungselementes 24 angeordneten Radialöffnungen 72 dargestellt

### Bezugszeichenliste

- 1.: Lamellen-Kupplungseinrichtung
- 2.: Kupplungsanordnung
- 4.: Kupplungsanordnung
- 6.: Außenlamellen
- 7.: Außenlamellen
- 8.: Außenlamellenträger
- 9.: Außenlamellenträger
- 10.: Innenlamellen
- 11.: Innenlamellen
- 12.: Innenlamellenträger
- 13.: Innenlamellenträger
- 14.: Nabe
- 15.: Nabe
- 16.: innere Getriebeeingangswelle
- 17.: äußere Getriebeeingangswelle
- 18.: Lageranordnung
- 20.: Deckel
- 22.: Eingangsnabe
- 24.: Betätigungselement
- 26.: Betätigungselement
- 28.: Trägerelement
- 30.: Trägerelement
- 32.: Ringnut
- 33.: Dichtungselement
- 34.: Ringnut
- 35.: Dichtungselement
- 36.: Druckraum
- 38.: Mitnehmerscheibe
- 40.: Nabe
- 42.: Druckausgleichsraum
- 44.: Dichtelement
- 46.: Sicherungselement
- 48.: Rückstellfeder
- 50.: Druckraum
- 52.: Dichtungselement
- 54.: Druckausgleichsraum
- 56.: Wandung
- 60.: Dichtelement
- 62.: Ölzuführelement
- 63.: Ringkanal
- 64.: Ringkanal
- 65.: Ringkanal
- 66.: axialer Erstreckungsbereich
- 67.: Lageranordnung
- 70.: Sicherungselement
- 72.: Radialöffnungen
- 74.: Absatz

## Patentansprüche

1. Lamellen-Kupplungseinrichtung (1) zur Drehmomentübertragung in einem Antriebsstrang eines Kraftfahrzeugs zwischen einer Antriebseinheit und einem Getriebe, wobei die Kupplungseinrichtung mindestens ein, mittels einem hydraulisch betätigbaren Kolben, betätigbares Lamellenpaket aufweist, welches mit einem Innenlamellenträger (12, 13) drehfest angeordnete Innenlamellen (10,11) und mit einem Außenlamellenträger (8, 9) drehfest angeordnete Außenlamellen (6, 7) aufweist, wobei zur Kühlung des Lamellenpakets die Lamellen-Kupplungseinrichtung (1) mit von einer Kühlölversorgungs-Einrichtung bereitgestellten Kühlöl durchströmt wird, wobei der mindestens eine Kolben mehrteilig ausgebildet ist und ihm ein an die Kühlölversorgungs-Einrichtung angeschlossener Fliehkraftdruckausgleichsraum (42, 54) zugeordnet ist, wobei der mindestens eine Kolben aus einem radial inneren Trägerelement (28, 30) und einem radial äußeren Betätigungselement (24, 26) gebildet wird und wobei das Trägerelement (28, 30) über eine erste Wirkfläche mit einem Druckraum (36, 50) und mit einer zweiten Wirkfläche mit dem Druckausgleichsraum (33, 54) in Wirkverbindung steht, wobei die beiden Wirkflächen gegenüberliegend angeordnet sind, **dadurch gekennzeichnet,**
**dass** das Trägerelement (28, 30) zumindest teilweise aus Kunststoff besteht.

2. Lamellen-Kupplungseinrichtung nach Anspruch 1,
**dadurch gekennzeichnet,**
**dass** das Trägerelement (28, 30) Ringnuten (32, 34) zur Aufnahme von Dichtungselementen (33, 35, 44, 52, 58, 60) aufweist, welche den Druckraum (36, 50) und den Druckausgleichsraum (33, 54) abdichten.

3. Lamellen-Kupplungseinrichtung nach Anspruch 1,
**dadurch gekennzeichnet,**
**dass** das Trägerelement (28, 30) an seinem Außenumfang einen Axialanschlag (46) zur Axialsicherung des Betätigungselementes (24, 26) aufweist.

4. Lamellen-Kupplungseinrichtung nach Anspruch 1,
**dadurch gekennzeichnet,**
**dass** das Trägerelement (28, 30) gegenüber dem Betätigungselement (24, 26) verdrehgesichert ist.

5. Lamellen-Kupplungseinrichtung nach Anspruch 1,
**dadurch gekennzeichnet,**
**dass** das Trägerelement (28, 30) aus einem anderen Material besteht als das Betätigungselement (24, 26).

6. Lamellen-Kupplungseinrichtung nach Anspruch 1,
**dadurch gekennzeichnet,**
**dass** das Trägerelement (28, 30) zumindest teilweise aus Metall, z.B. Aluminium besteht.

7. Lamellen-Kupplungseinrichtung nach Anspruch 1,
**dadurch gekennzeichnet,**
**dass** das Betätigungselement (24, 26) aus Stahlblech besteht.

8. Lamellen-Kupplungseinrichtung nach Anspruch 1,
**dadurch gekennzeichnet,**
**dass** die in die Nuten eingesetzten Dichtringe als Lippendichtungen oder Formdichtungen ausgeführt sind um die Hysterese im System klein zu halten.

## Claims

1. Multi-plate clutch device (1) for the transmission of torque in a drive train of a motor vehicle between a drive unit and a transmission, the clutch device having at least one multi-plate assembly which can be actuated by means of a hydraulically actuable piston and has inner plates (10, 11) which are arranged in a rotationally fixed manner with an inner plate carrier (12, 13) and outer plates (6, 7) which are arranged in a rotationally fixed manner with an outer plate carrier (8, 9), the multi-plate clutch device (1) being flowed through with cooling oil which is provided by a cooling-oil supply device in order to cool the multi-plate assembly, the at least one piston being configured in multiple pieces and being assigned a centrifugal-force compensation space (42, 54) which is connected to the cooling-oil supply device, the at least one piston being formed from a radially inner carrier element (28, 30) and a radially outer actuating element (24, 26), and the carrier element (28, 30) being operatively connected to a pressure space (36, 50) via a first active face and to the pressure compensation space (33, 54) by way of a second active face, the two active faces being arranged so as to lie opposite one another, **characterized in that** the carrier element (28, 30) is composed at least partially of plastic.

2. Multi-plate clutch device according to Claim 1, **characterized in that** the carrier element (28, 30) has annular grooves (32, 34) for receiving sealing elements (33, 35, 44, 52, 58, 60) which seal the pressure space (36, 50) and the pressure compensation space (33, 54).

3. Multi-plate clutch device according to Claim 1, **characterized in that** the carrier element (28, 30) has an axial stop (46) on its outer circumference for axially securing the actuating element (24, 26).

4. Multi-plate clutch device according to Claim 1, **characterized in that** the carrier element (28, 30) is rotationally locked with respect to the actuating element (24, 26).

5. Multi-plate clutch device according to Claim 1, **characterized in that** the carrier element (28, 30) is composed of a different material to the actuating element (24, 26).

6. Multi-plate clutch device according to Claim 1, **characterized in that** the carrier element (28, 30) is composed at least partially of metal, for example aluminium.

7. Multi-plate clutch device according to Claim 1, **characterized in that** the actuating element (24, 26) is composed of steel plate.

8. Multi-plate clutch device according to Claim 1, **characterized in that** the sealing rings which are inserted into the grooves are configured as lip seals or shaped seals, in order to keep the hysteresis in the system low.

## Revendications

1. Dispositif d'embrayage à disques (1) pour le transfert de couple dans une chaîne cinématique d'un véhicule automobile entre une unité d'entraînement et une boîte de vitesses, le dispositif d'embrayage présentant au moins un paquet de disques pouvant être commandé au moyen d'un piston à commande hydraulique, lequel paquet de disques présente des disques internes (10, 11) disposés de manière solidaire en rotation avec un support de disques internes (12, 13) et des disques externes (6, 7) disposés de manière solidaire en rotation avec un support de disques externes (8, 9), le dispositif d'embrayage à disques (1) étant parcouru par de l'huile de refroidissement fournie par un dispositif d'alimentation en huile de refroidissement en vue du refroidissement du paquet de disques, l'au moins un piston étant réalisé en plusieurs parties et étant associé à un espace d'équilibrage de la pression de la force centrifuge (42, 54) raccordé au dispositif d'alimentation en huile de refroidissement, l'au moins un piston étant formé d'un élément de support radialement interne (28, 30) et d'un élément d'actionnement radialement externe (24, 26) et l'élément de support (28, 30) étant en liaison fonctionnelle par le biais d'une première surface active avec un espace de pression (36, 50) et par le biais d'une deuxième surface active avec l'espace d'équilibrage de la pression (33, 54), les deux surfaces actives étant disposées à l'opposé l'une de l'autre,
**caractérisé en ce que** l'élément de support (28, 30) se compose au moins en partie de plastique

2. Dispositif d'embrayage à disques selon la revendication 1,
**caractérisé en ce que**
l'élément de support (28, 30) présente des rainures annulaires (32, 34) pour recevoir des éléments d'étanchéité (33, 35, 44, 52, 58, 60), lesquels réalisent l'étanchéité de l'espace de pression (36, 50) et de l'espace d'équilibrage de la pression (33, 54).

3. Dispositif d'embrayage à disques selon la revendication 1,
**caractérisé en ce que**
l'élément de support (28, 30) présente, au niveau de sa périphérie extérieure, une butée axiale (46) pour la fixation axiale de l'élément d'actionnement (24, 26).

4. Dispositif d'embrayage à disques selon la revendication 1,
**caractérisé en ce que**
l'élément de support (28, 30) est fixé en rotation par rapport à l'élément d'actionnement (24, 26).

5. Dispositif d'embrayage à disques selon la revendication 1,
**caractérisé en ce que**
l'élément de support (28, 30) se compose d'un matériau différent de l'élément d'actionnement (24, 26).

6. Dispositif d'embrayage à disques selon la revendication 1,
**caractérisé en ce que**
l'élément de support (28, 30) se compose au moins en partie de métal, par exemple d'aluminium.

7. Dispositif d'embrayage à disques selon la revendication 1,
**caractérisé en ce que**
l'élément d'actionnement (24, 26) se compose de tôle d'acier.

8. Dispositif d'embrayage à disques selon la revendication 1,
**caractérisé en ce que**
les bagues d'étanchéité insérées dans les rainures sont réalisées sous forme de joints d'étanchéité à lèvre ou de joints d'étanchéité profilés afin de maintenir petite l'hystérésis dans le système.
